# EUROPÄISCHE PATENTSCHRIFT

(11) **EP 1 106 540 B1**
(45) Veröffentlichungstag und Bekanntmachung des Hinweises auf die Patenterteilung: **23.04.2003**
(21) Anmeldenummer: 00125859.9
(22) Anmeldetag: 25.11.2000
(51) Int. Cl.: B65G 17/32

(54) **Verfahren und Vorrichtung zum kontrollierten Übernehmen eines Gegenstandes, insbesondere einer teilweise oder vollständig gebildeten Faltschachtel**
Method and device for the controlled feeding of articles, in particular partly or fully formed cartons
Procédé et dispositif pour une alimentation controlée d'articles, notamment des cartons formés partiellement ou complètement

(30) Priorität: 02.12.1999 DE 19958019
(43) Veröffentlichungstag der Anmeldung: 13.06.2001
(73) Patentinhaber: Seidel, Helmut, 65396 Walluf (DE)
(72) Erfinder: Dojan, Viktor, 55237 Flonheim (DE)
(74) Vertreter: Quermann, Helmut, Dipl.-Ing.

(56) Entgegenhaltungen:
- EP-A- 0 705 684
- DE-B- 1 222 845
- DE-C- 3 930 720
- US-A- 3 627 106

## Beschreibung

Die Erfindung betrifft ein Verfahren und eine Vorrichtung zum kontrollierten Übernehmen eines Gegenstandes, insbesondere einer teilweise oder vollständig gebildeten Faltschachtel, von einer ersten Fördervorrichtung in eine zweite Fördervorrichtung.

Beim Fördern von Gegenständen kommt es oftmals darauf an, diese sehr präzise zu fördern. Es reicht nicht aus, beispielsweise in einem Karton verpackte Waren mittels eines Fördermittels einem zweiten Fördermittel zuzuführen und dort zum Weitertransport durch dieses abzustellen. Oftmals ist es erforderlich, daß eine zweite Fördervorrichtung Gegenstände in einer definierten Position übernimmt. Hohe Anforderungen werden beispielsweise auf dem Gebiet der Verpackungstechnik gestellt. So ist es bei der Herstellung von Faltschachteln, die in aller Regel Quaderform aufweisen, von großer Bedeutung, daß die benachbarten Seiten der Faltschachtel in einem rechten Winkel angeordnet sind, da die Faltschachtel sonst schief ist und damit insbesondere deren Stapelfähigkeit und ästhetische Eigenschaften beeinträchtigt sind. Dieses Problem ist bei der Herstellung von Faltschachteln deshalb von besonderer Bedeutung, weil aus vorgefalteten und zusammengeklebten Kartonzuschnitten gebildete Verpackungen vor dem Einlegen des Produktes in den Karton aufgerichtet werden müssen und die Öffnungsvorspannung des Kartons die Tendenz hat, den Karton in eine Form mit parallelogrammförmigem Querschnitt zu bringen. Auch bei der Bildung von Verpackungen in sogenannten Wrap-Around-Verfahren, bei dem der Zuschnitt um das zu verpackende Produkt gefaltet wird, ist dieses Problem zu verzeichnen.

Andererseits sind Fördervorrichtungen für Gegenstände, insbesondere Faltschachteln, so auszulegen, daß unterschiedlich große Gegenstände transportiert werden können. Relevant ist in diesem Zusammenhang die Höhe des jeweiligen Gegenstandes. Um einen geordneten Fertigungsablauf zu erzielen, ist die Anforderung zu stellen, daß eine Fördervorrichtung bzw. eine Anordnung von Fördervorrichtungen ein optimales Übergeben bzw. Übernehmen von Gegenständen, unabhängig von deren Höhe, gestattet.

Aus der DE 39 30 720 C1 ist ein Verfahren und eine Vorrichtung zum kontrollierten Übernehmen eines Gegenstandes, insbesondere einer Faltschachtel, bekannt. Dort führt eine erste Fördervorrichtung, die sich entlang einer Kreisbahn bewegt, die jeweilige Faltschachtel mit einer horizontalen und nach unten gerichteten vertikalen Komponente einer zweiten Fördervorrichtung zu. Diese weist zur Aufnahme der Faltschachtel einen vorderen und einen hinteren Mitnehmer auf, die in der endlos umlaufenden zweiten Fördervorrichtung gehalten sind, wobei beide Mitnehmer synchron laufen. Die Geschwindigkeiten der ersten Fördervorrichtung und der Mitnehmer der zweiten Fördervorrichtung, bezogen auf deren horizontale Komponenten, sind so abgestimmt, daß die Faltschachtel von der ersten Fördervorrichtung gegen den bereits von unten eingeschwenkten, senkrecht zur Förderrichtung der zweiten Fördervorrichtung orientierten vorderen Mitnehmer bewegt wird, während der hintere Mitnehmer im Umlenkbereich dieses hinteren Mitnehmers von unten nach oben hinter die Faltschachtel eingeschwenkt wird. Überlagert wird diese Bewegung des hinteren Mitnehmers durch die horizontale, in Förderrichtung des vorderen Mitnehmers gerichtete Bewegung der noch von der ersten Fördervorrichtung gehaltenen Faltschachtel sowie die durch diese Fördervorrichtung bewirkte überlagerte vertikale, nach unten gerichtete Bewegung der Faltschachtel, die dazu führen, daß die Faltschachtel gegen den vorderen Mitnehmer und einen Förderboden bewegt wird, auf dem die Faltschachtel zu liegen kommt. Nach dem Einschwenkvorgang des hinteren Mitnehmers ist die Faltschachtel in der durch die beiden Mitnehmer gebildeten Förderzelle fixiert. - Nachteilig ist bei dem in dieser Schrift beschriebenen Verfahren bzw. Vorrichtung, daß die kontrollierte Übergabe einzig und allein aufgrund der Ausbildung der recht kompliziert gestalteten ersten Fördervorrichtung bewerkstelligt werden kann. Die Flexibilität bei der Übergabe der Gegenstände, insbesondere der Faltschachteln, kann aber nur durch eine besondere Wirkungsweise der zweiten Fördervorrichtung erzielt werden. Nur hierdurch ist sichergestellt, daß ein Fördern des Gegenstands bei relativ hoher Geschwindigkeit erfolgen kann.

Aus der DE 198 03 297 A1 ist eine Vorrichtung zum Transportieren von Faltschachteln bekannt. Ein vorderer Mitnehmer ist an einem ersten, oberen, umlaufenden Fördermittel befestigt, während ein hinterer Mitnehmer mit einem zweiten, unteren, umlaufenden Fördermittel verbunden ist.

In der DE 40 28 635 C1 ist ein beweglicher Mitnehmer für eine Faltmaschine beschrieben. In der einen vertikalen Stellung dient der Mitnehmer der Förderung einer Faltschachtel, während er in seiner horizontalen Stellung eingefahren ist und sich damit außer Wirkung befindet. In diesem Fall kann durch den jeweils in Wirkstellung befindlichen Mitnehmer eine Faltschachtel größeren Formats transportiert werden, die den eingeschwenkten Mitnehmer überdeckt.

Eine weitere Fördervorrichtung in Verpackungsmaschinen ist aus der DE 40 36 510 A1 bekannt.

Aufgabe der Erfindung ist es, ein Verfahren und eine Vorrichtung anzugeben, mit dem bzw. der eine präzise Übergabe eines in einer Förderrichtung geförderten Gegenstandes, insbesondere einer Faltschachtel, von einer ersten Fördervorrichtung in eine zweite Fördervorrichtung sichergestellt ist, wobei eine Förderung des Gegenstandes bei relativ hoher Geschwindigkeit gewährleistet sein soll.

Erfindungsgemäß weist das Verfahren zum kontrollierten Übernehmen eines Gegenstandes, insbesondere einer teilweise oder vollständig gebildeten Faltschachtel, von einer ersten Fördervorrichtung in eine zweite Fördervorrichtung, wobei die zweite Fördervorrichtung mindestens ein erstes und mindestens ein zweites Fördermittel mit zugehörigen Mitnehmern beinhaltet, folgende Merkmale auf:
- die erste Fördervorrichtung bewegt den Gegenstand in Förderrichtung der zweiten Fördervorrichtung in deren Förderbereich,
- mindestens ein hinterer Mitnehmer der zweiten Fördervorrichtung wird hinter den Gegenstand bewegt,
- mindestens ein vorderer Mitnehmer der zweiten Fördervorrichtung wird vor den Gegenstand bewegt,
- die Geschwindigkeit des hinteren Mitnehmers in Förderrichtung des Gegenstandes ist beim Bewegen hinter den Gegenstand größer als die Geschwindigkeit des vorderen Mitnehmers in Förderrichtung des Gegenstandes beim Bewegen vor den Gegenstand, wobei der hintere Mitnehmer beim Bewegen hinter den Gegenstand eine synchrone Bewegung und der vordere Mitnehmer beim Bewegen vor den Gegenstand eine asynchrone Bewegung ausführt,
- bei Beendigung der Bewegungen von hinterem und vorderem Mitnehmer sind die Geschwindigkeiten der Mitnehmer in Förderrichtung gleich.

Wesentlich ist bei dem erfindungsgemäßen Verfahren, daß bei der Übergabe des Gegenstandes in die zweite Fördervorrichtung der hintere und der vordere Mitnehmer anfänglich eine unterschiedliche Geschwindigkeit, bezogen auf die Bewegungskomponente in Förderrichtung des Gegenstandes aufweisen und diese Geschwindigkeitsdifferenz mit fortschreitendem Bewegen des hinteren Mitnehmers hinter den Gegenstand bzw. fortschreitendem Bewegen des vorderen Mitnehmers vor den Gegenstand reduziert wird, bis der vordere und der hintere Mitnehmer auf den abgewandten Seiten des Gegenstandes plaziert sind und mit derselben Geschwindigkeit in Förderrichtung des Gegenstandes bewegt werden. Besondere Bedeutung kommt in diesem Zusammenhang der Geschwindigkeitsänderung des vorderen Mitnehmers beim Bewegen vor den Gegenstand, somit dem asynchron bewegten vorderen Mitnehmer zu. Der vordere Mitnehmer wird in Abstand zu der vorlaufenden Fläche des Gegenstandes vor diese bewegt und mit zunehmender Bewegung zum Erreichen seiner Endstellung relativ zum Gegenstand bewegt. Hierin ist ein entscheidender Vorteil zu sehen, da es nicht erforderlich ist, den vorderen Mitnehmer zunächst vollständig in die Endlage vor den Gegenstand zu bewegen, anschließend den Gegenstand, unter Überbrückung einer Distanz, gegen den vorderen Mitnehmer zu bewegen und schließlich den hinteren Mitnehmer gegen den vorgefahrenen Gegenstand zu plazieren. Entsprechend dem erfindungsgemäßen Verfahren besteht stattdessen die Möglichkeit, den Gegenstand mit konstanter Fördergeschwindigkeit zu bewegen und den mit gleichbleibender Geschwindigkeit, somit synchron bewegten hinteren Mitnehmer und den mit veränderlicher Geschwindigkeit, somit asynchron bewegten vorderen Mitnehmer definiert gegen den Gegenstand auf seinen abgewandten Seiten zu plazieren.

Zweckmäßig sollte die erste Fördervorrichtung außer Wirkstellung mit dem Gegenstand gebracht werden, sobald sich der hintere und der vordere Mitnehmer in deren hinter den Gegenstand bzw. vor den Gegenstand bewegten Stellungen befinden. Die erste Fördervorrichtung kann sich unterschiedlicher Wirkprinzipien bedienen. So kann der Gegenstand mittels der ersten Fördervorrichtung beispielsweise saugend erfaßt und die Sauger entlang einer Führungsschiene, insbesondere einer horizontal angeordneten Führungsschiene, verfahren werden. Es ist auch denkbar, den Gegenstand mittels Greifern zu fassen oder ihn mittels den Gegenstand oben kontaktierender Riemen auf einer Unterlage vorzuschieben. Schließlich ist ein Transport mittels eines Förderbandes denkbar.

Gemäß einer besonderen Weiterbildung des erfindungsgemäßen Verfahrens ist vorgesehen, daß der hintere Mitnehmer und/oder der vordere Mitnehmer eingeschwenkt werden, insbesondere zur Anlage am Gegenstand eingeschwenkt werden. Eine solche Bewegung ist insbesondere dann von Vorteil, wenn die zweite Fördervorrichtung durch zwei umlaufende Fördermittel gebildet ist, von denen jeweils eines eine Vielzahl in gleichem Abstand angeordneter vorderer Mitnehmer bzw. eines in diesem Abstand angeordnete hintere Mitnehmer aufweist. Der Umlenkbereich des jeweiligen umlaufenden Fördermittels eignet sich besonders um die Einschwenkbewegung des jeweiligen hinteren bzw. vorderen Mitnehmers zu vollführen. Die Einschwenkbewegung erfolgt vorzugsweise von unten nach oben, könnte aber genauso von oben nach unten oder seitlich erfolgen.

Zweckmäßig wird der hintere Mitnehmer synchron zur Bewegung des Gegenstandes mittels der zweiten Fördervorrichtung und/oder der vordere Mitnehmer asynchron zur Bewegung des Gegenstandes mittels der zweiten Fördervorrichtung eingeschwenkt. Beim synchronen Einschwenken des hinteren Mitnehmers ist es somit ausreichend, wenn dieser beispielsweise fest mit einer umlaufenden Kette verbunden ist, die mit einer der Fördergeschwindigkeit der ersten Fördervorrichtung entsprechenden Geschwindigkeit angetrieben wird. In diesem Fall ist nur noch die veränderliche Geschwindigkeit des jeweiligen vorderen Mitnehmers abzustimmen.

Das erfindungsgemäße Verfahren eignet sich vorzugsweise dafür, Gegenstände, insbesondere Faltschachteln, zu transportieren, die parallele Flächen aufweisen, wobei der hintere Mitnehmer gegen die in Förderrichtung hintere parallele Fläche und der vordere Mitnehmer gegen die in Förderrichtung vordere parallele Fläche bewegt wird.

Während der Bildung der Faltschachtel ist es von großem Vorteil, wenn die in Förderrichtung hintere Fläche des Gegenstandes weitgehend frei zugänglich ist, so daß diese zum Vorschieben der Faltschachtel durch Mitnehmer hintergriffen werden kann. Es ist ferner zweckmäßig, wenn die obere Fläche, somit die Deckelfläche der Faltschachtel, weitgehend frei zugänglich ist, damit ein oder mehrere Oberläufer auf diese zwecks Förderung der Faltschachtel einwirken können und, sofern erforderlich, sicherstellen, daß die Faltschachtel streng quaderförmig gegen den vorderen Mitnehmer positioniert wird. Unter diesem Aspekt wird es als besonders vorteilhaft angesehen, wenn zwei in Abstand zueinander angeordnete hintere Mitnehmer hinter dem Gegenstand und ein, bezogen auf die Förderrichtung, zwischen den beiden hinteren Mitnehmern angeordneter vorderer Mitnehmer vor den Gegenstand bewegt wird. Wesentlich ist des weiteren, daß der jeweilige hintere Mitnehmer eine wesentlich geringere Höhe aufweist, konkret eine Höhe, die geringer ist als die Höhe des niedrigsten zu transportierenden Gegenstandes und der vordere Mitnehmer eine Höhe aufweist, die etwa der Höhe des höchsten zu transportierenden Gegenstandes entspricht. Die niedrige Höhe des jeweiligen hinteren Mitnehmers stellt die Positionierung des Gegenstandes in dessen unterem Bereich sicher, kann aber, insbesondere bei relativ hohen zu transportierenden Gegenständen wenig zur winkelgenauen Positionierung des Gegenstandes beitragen. Von besonderer Bedeutung ist deshalb die besonders hohe Ausbildung des vorderen Mitnehmers, der bei relativ geringe Höhe aufweisenden zu transportierenden Gegenständen, diese überragt und bezüglich der Höhe des höchsten zu transportierenden Gegenstandes dimensioniert ist. Der vordere Mitnehmer erstreckt sich somit in seiner vor den Gegenstand gesenkten Stellung immer über die gesamte Höhe des zu transportierenden Gegenstandes und erlaubt es infolgedessen, den Gegenstand auszurichten, indem er einerseits relativ zu den hinteren Mitnehmern bewegt wird und die erste Fördervorrichtung, sei es in Art einer Fördervorrichtung mit Saugern, einer Fördervorrichtung mit Oberläufern oder dergleichen, auf den Gegenstand im Sinne der Anlage der vorlaufenden Fläche des Gegenstandes am vorderen Mitnehmer einwirkt.

Die aus der DE 39 30 720 C1 bekannte, gattungsbildende Vorrichtung zum kontrollierten Übernehmen eines Gegenstandes, insbesondere einer teilweise oder vollständig gebildeten Faltschachtel, von einer ersten Fördervorrichtung in eine zweite Fördervorrichtung, bei der die zweite Fördervorrichtung mindestens ein erstes umlaufendes Fördermittel aufweist, das mit hinteren Mitnehmern versehen ist, die jeweils starr mit dem ersten Fördermittel verbunden sind, weist erfindungemäß folgende weitere Merkmale auf:
- mindestens ein zweites umlaufendes Fördermittel, das mit vorderen Mitnehmern versehen ist, die jeweils beweglich mit dem zweiten Fördermittel verbunden sind,
- der jeweilige vordere Mitnehmer ist mit mindestens einem Lagerhebel verbunden, der schwenkbar im zweiten Fördermittel gelagert ist, und es ist mindestens ein Stellelement zum Schwenken des Lagerhebels vorgesehen, das schwenkbar im zweiten Fördermittel und schwenkbar im Lagerheben gelagert ist,
- die beiden Fördermittel werden mit derselben Fördergeschwindigkeit angetrieben.

Wesentlich ist bei der erfindungsgemäßen Vorrichtung somit, daß der jeweilige hintere Mitnehmer starr mit dem diesem zugeordneten Fördermittel verbunden ist, während der jeweilige vordere Mitnehmer beweglich in dem diesem zugeordneten Fördermittel gelagert ist. Vorzugsweise sind parallel zueinander angeordnete erste umlaufende Fördermittel und ein zwischen diesen angeordnetes zweites umlaufendes Fördermittel vorgesehen. Die dem ersten Fördermittel zugeordneten hinteren Mitnehmer wirken somit in einem äußeren Bereich des Gegenstandes bzw. der teilweise oder vollständig gebildeten Faltschachtel auf diesen bzw. diese von hinten ein, während die vorderen Mitnehmer zentral auf den vorderen Bereich des Gegenstandes bzw. der Faltschachtel einwirken.

Eine besonders einfache Gestaltung der ersten und/oder zweiten umlaufenden Fördermittel ergibt sich, wenn diese als Förderkette ausgebildet sind. Die Verbindungsbolzen der einzelnen Kettenglieder der jeweiligen Förderkette eignen sich besonders gut, um den vorderen und hinteren Mitnehmer zu lagern.

Die kinematischen Vorgaben zum Einschwenken des jeweiligen vorderen Mitnehmers vor den Gegenstand lassen sich auf besonders einfache Art und Weise erfüllen, wenn das Stellelement, das mit dem Lagerhebel des vorderen Mitnehmers zusammenwirkt, in dem dem vorderen Mitnehmer vorlaufenden Bereich im zweiten Fördermittel gelagert ist. Die Schwenkbewegung des vorderen Mitnehmers wird somit bereits dann eingeleitet, wenn die vorlaufende Lagerstelle des Stellelements den Umlenkbereich des Fördermittels erreicht. Um den jeweiligen vorderen Mitnehmer präzise zu führen, sollten zwei Lagerhebel und zwei Stellelemente vorgesehen sein, die zwischen sich das zweite Fördermittel aufnehmen.

Gemäß einer besonderen Ausgestaltung der erfindungsgemäßen Vorrichtung ist vorgesehen, daß der vordere Mitnehmer derart schwenkbar angelegt ist, daß er beim Umlenken im Bereich der hinteren Umlenkung des zweiten umlaufenden Fördermittels in Art einer Sinusbewegung in den Förderbereich, insbesondere den oberen Förderbereich dieses Fördermittels, bis zum Erreichen der vertikalen Endstellung dieses Mitnehmers verschwenkt wird. In der Konsequenz wird der vordere Mitnehmer dem Gegenstand mit sinusförmig abnehmender Geschwindigkeit, somit optimal angenähert. Dies bildet die Voraussetzung dafür, daß die Vorrichtung auf einfache Art und Weise auf unterschiedliche Größen von Gegenständen, insbesondere was deren Ausdehnung in Förderrichtung betrifft, angepaßt werden kann. Es ist nur erforderlich, das erste und das zweite Fördermittel relativ zueinander zu verstellen und die Feinabstimmung der vorderen Mitnehmer vorzunehmen.

Um eine präzise Endlage des jeweiligen vorderen Mitnehmers zu gewährleisten, sollte in das zweite Fördermittel ein Anlageelement integriert sein, gegen das ein mit dem Lagerhebel verbundener Anschlag beim Erreichen der ausgeschwenkten Endstellung des Mitnehmers bewegt wird.

Da die hinteren und die vorderen Mitnehmer eine unterschiedliche Funktion erfüllen, sind sie den unterschiedlichen Fördermitteln zugeordnet. Die Umlenkung des die hinteren Mitnehmer aufnehmenden ersten Fördermittels erfolgt an einer Stelle vor der Umlenkung des die vorderen Mitnehmer aufnehmenden zweiten Fördermittels. Bei Verwendung von Ketten sind die Zahnräder der beiden Fördermittel recht dicht beieinander angeordnet, um zwischen dem jeweiligen vorderen und hinteren Mitnehmer einen Gegenstand auch kleiner Abmessung positionieren zu können. Um bei dieser Vorgabe zu gewährleisten, daß der jeweilige vordere Mitnehmer im erfindungsgemäßen Sinne ausgeschwenkt werden kann, ist vorgesehen, daß er mit einer oberen zentralen Aussparung versehen ist. Diese wird beim Hochschwenken des Mitnehmers von dem Zahnrad des die hinteren Mitnehmer aufnehmenden Fördermittels durchsetzt.

Weitere Merkmale der Erfindung sind in den Patentansprüchen, der Beschreibung der Figuren und in den Figuren selbst beschrieben, wobei bemerkt wird, daß alle Merkmale und Einzelmerkmale erfindungswesentlich sind.

In den Figuren ist die Erfindung beispielhaft verdeutlicht, ohne auf das veranschaulichte Beispiel beschränkt zu sein. Es stellt dar:
- Figur 1: eine räumliche Ansicht des erfindungswesentlichen Bereiches einer Verpackungsmaschine, schräg von oben gesehen,
- Figur 2: eine schematische Darstellung der erfindungsgemäßen Vorrichtung zum kontrollierten Übergeben einer Faltschachtel bei der in Figur 1 gezeigten Verpackungsmaschine, veranschaulicht für die diversen zeitlichen Schritte der Übernahme der Faltschachtel, mit modifizierter erster Fördervorrichtung,
- Figur 3A: einen Schnitt durch das zweite Fördermittel mit dem von diesem aufgenommenen beweglichen vorderen Mitnehmer,
- Figur 3B: eine Ansicht des eigentlichen Mitnehmers, in Richtung des Pfeiles A gemäß Figur 3a gesehen,
- Figur 3C: einen Schnitt durch die Führungsschiene zur Aufnahme einer der beiden Förderketten des zweiten umlaufenden Fördermittels zur Aufnahme des vorderen Mitnehmers,
- Figur 3D: eine Darstellung der Lagerung des Lagerhebels des Mitnehmers in der Förderkette sowie der Verbindung von Lagerhebel und Stellelement,
- Figur 3E: eine Darstellung der Lagerung des Stellelementes in der Förderkette,
- Figur 3F: eine Darstellung der Lagerung des Anlageelements in der Förderkette,
- Figur 3G: eine seitliche Ansicht der Förderkette mit dem Mitnehmer, dem Lagerhebel, dem Stellelement sowie dem Anlageelement,
- Figuren 4A - 4J: unterschiedliche Verfahrensschritte bei der Übernahme der Faltschachtel von der ersten Fördervorrichtung in die zweite Fördervorrichtung.

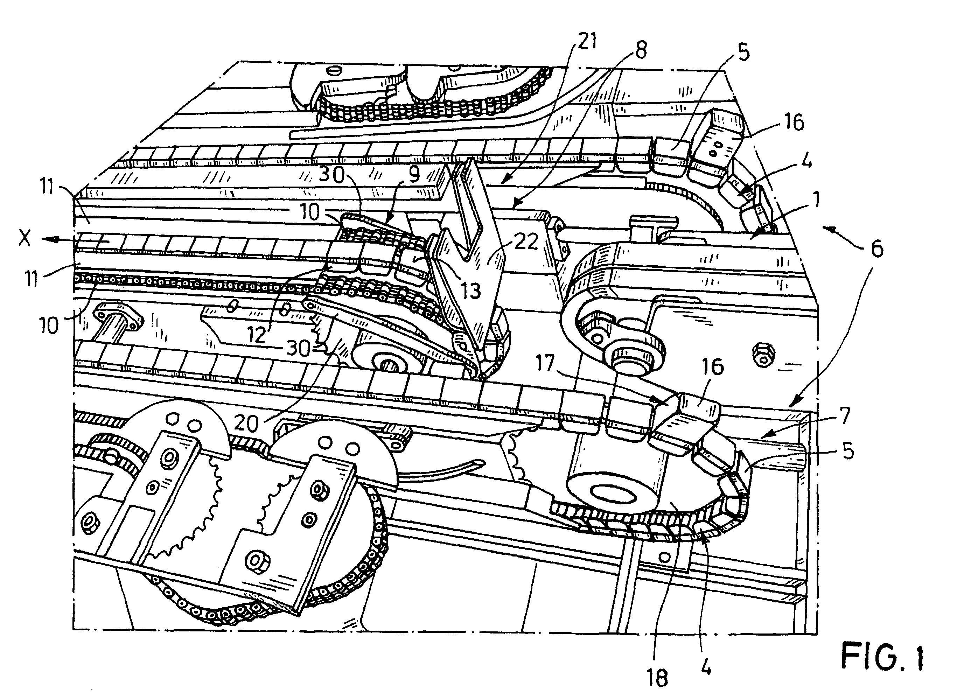

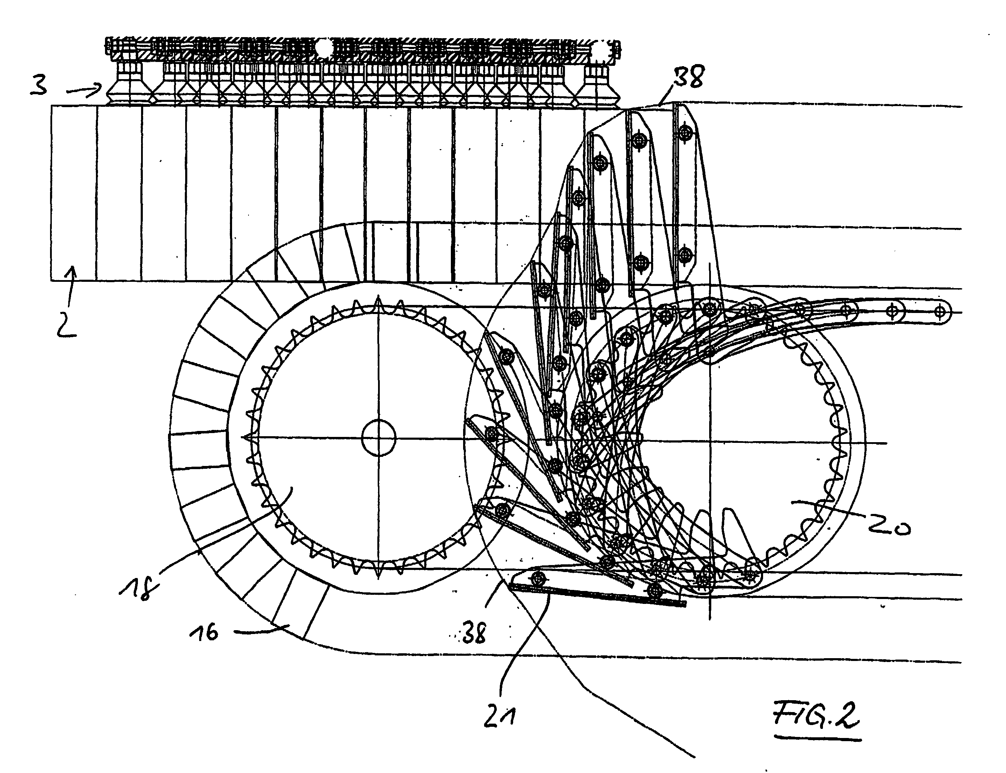

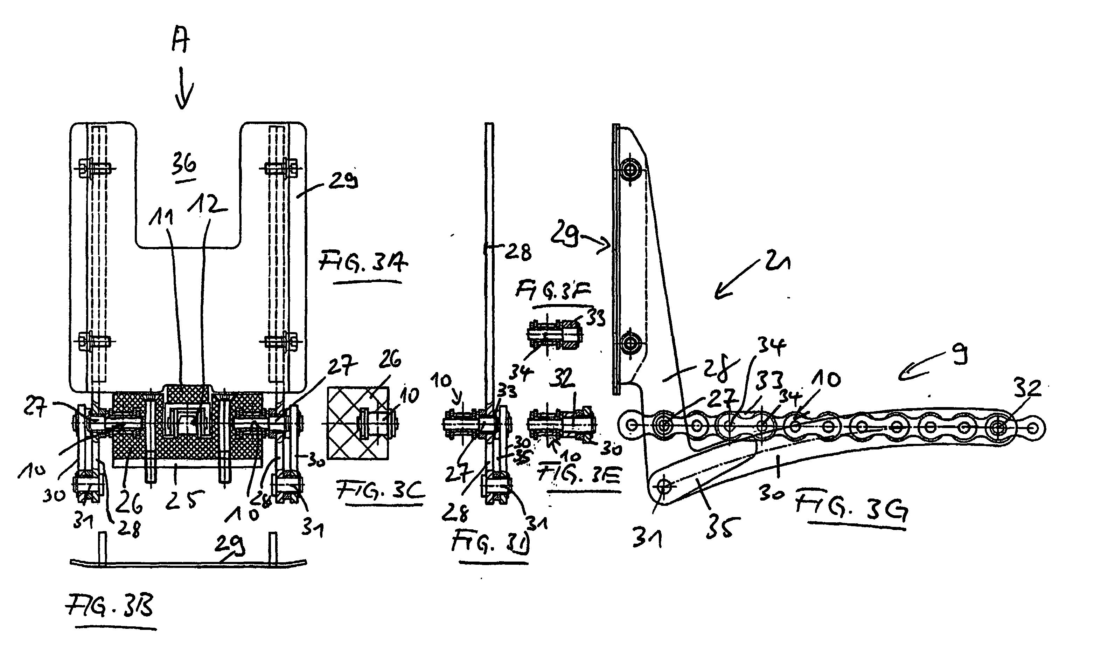

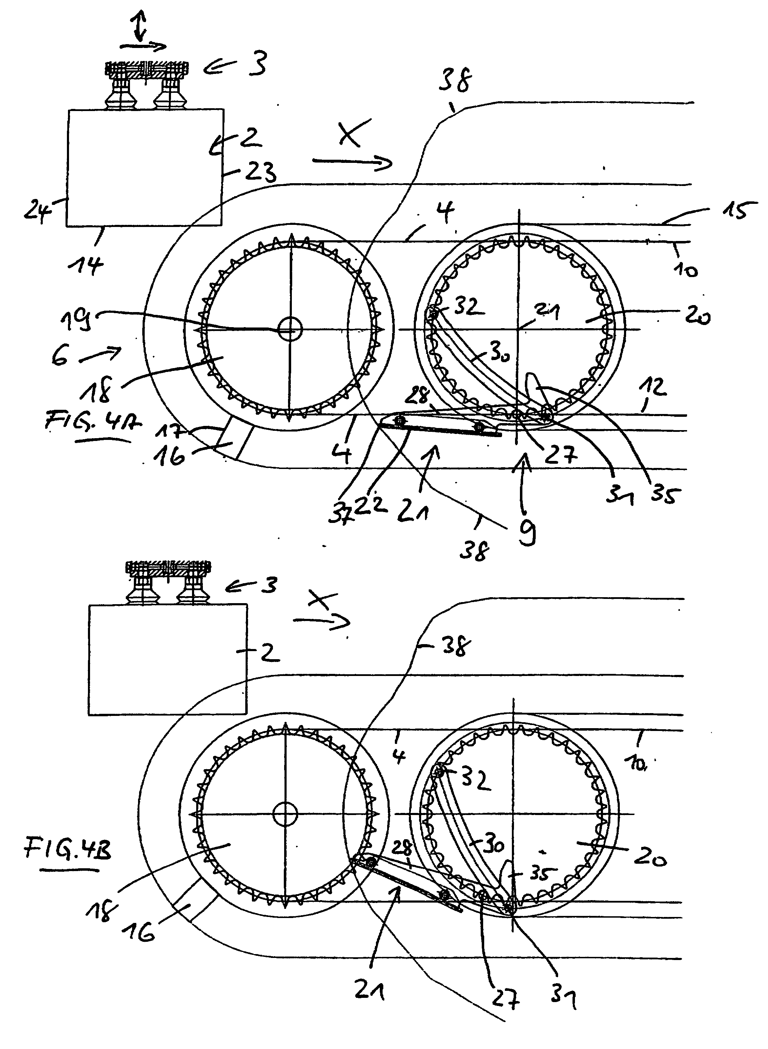

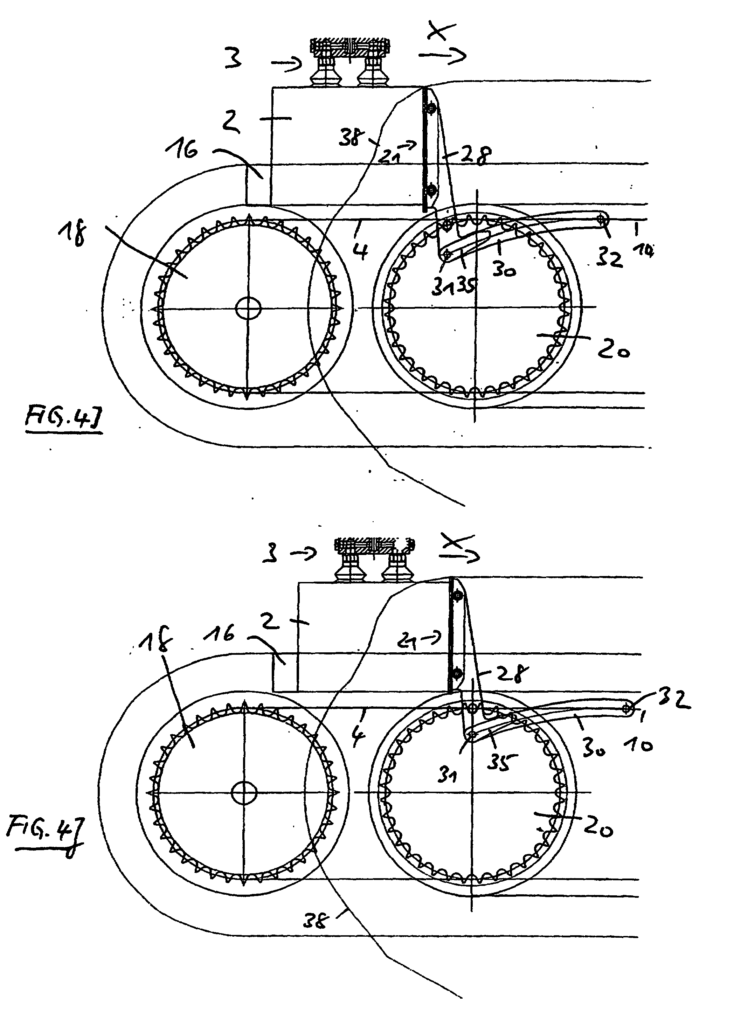

Die Figur 1 zeigt für den erfindungswesentlichen Bereich der Verpakkungsmaschine die Vorrichtung zum kontrollierten Übernehmen einer zumindest teilweise gebildeten Faltschachtel von der ersten Fördervorrichtung in die zweite Fördervorrichtung. Die Faltschachtel ist zumindest im Wrap-Around-Verfahren soweit vorgefertigt, daß sie eine Röhre bildet, die senkrecht zur Förderrichtung X orientiert ist und deren überlappender Kartonzuschnitt verklebt ist, so daß durch eine stirnseitige Öffnung anschließend das Produkt in die Faltschachtel eingelegt werden kann, und diese stirnseitig verschlossen wird. Die Faltschachtel wird quer zur Förderrichtung X horizontal orientiert von der ersten Fördervorrichtung, die beispielsweise als umlaufende Förderdoppelkette 1 mit Auflagen ausgebildet ist, in den Bereich der zweiten Fördervorrichtung transportiert. Statt der Förderdoppelkette 1 kann auch jedes andere geeignete Fördermittel Verwendung finden, beispielsweise die in den Figuren 2 und 4A-4J oberhalb der quaderförmigen Faltschachtel 2 angeordnete, in Förderrichtung X verfahrbare Sauganordnung 3. Im Sinne der veranschaulichten Pfeile ist diese Sauganordnung 3 zudem heb- und senkbar. Die Verfahrmittel für die Sauganordnung 3 sind in den Figuren nicht näher erläutert.

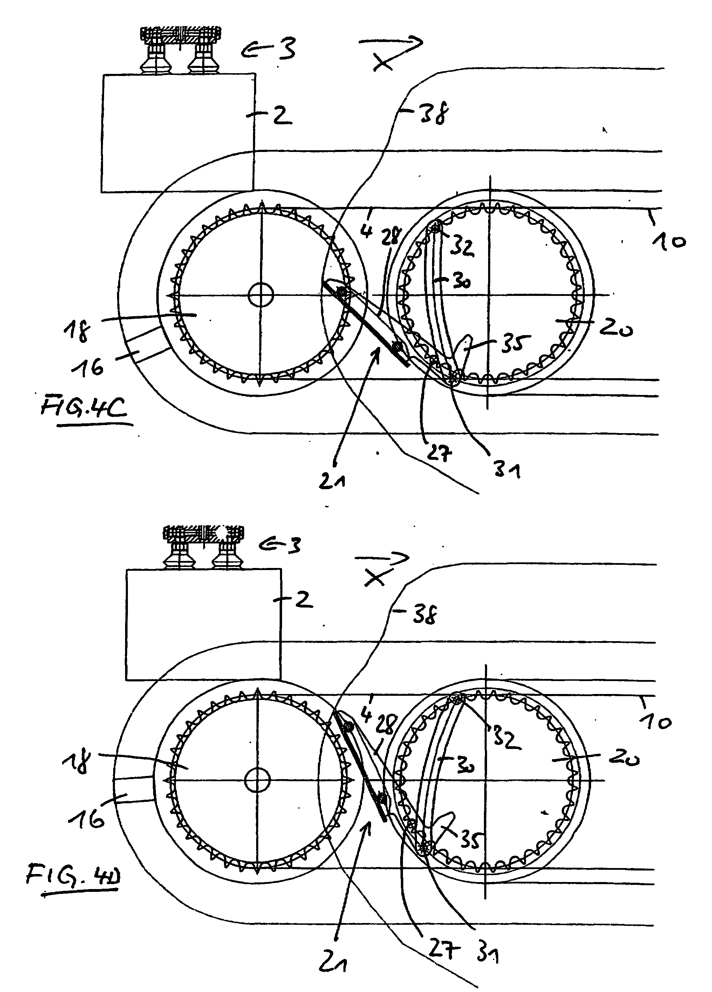

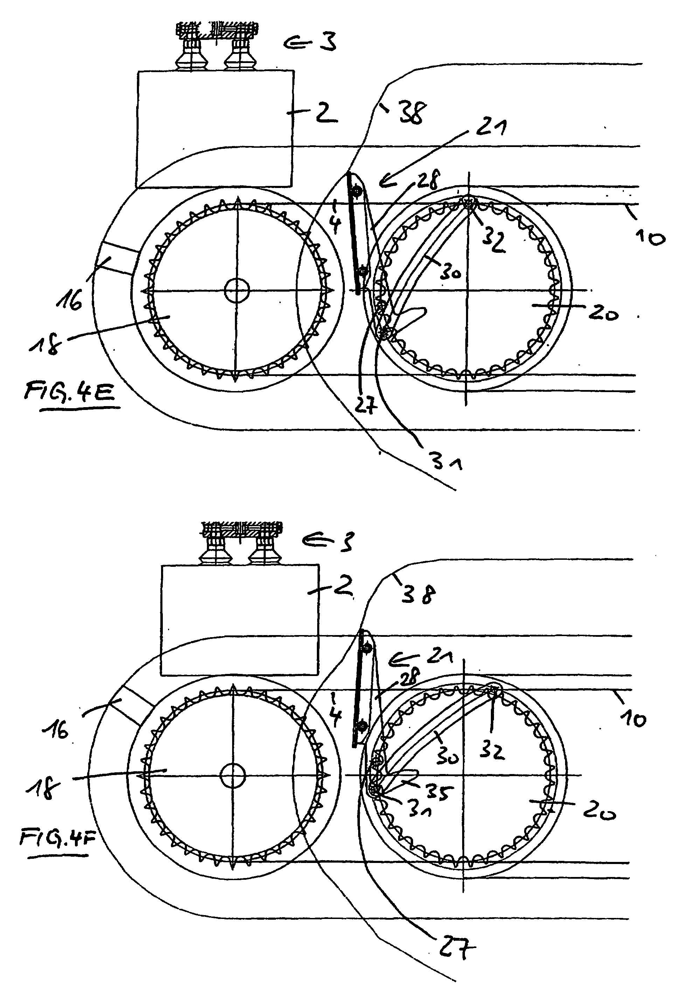

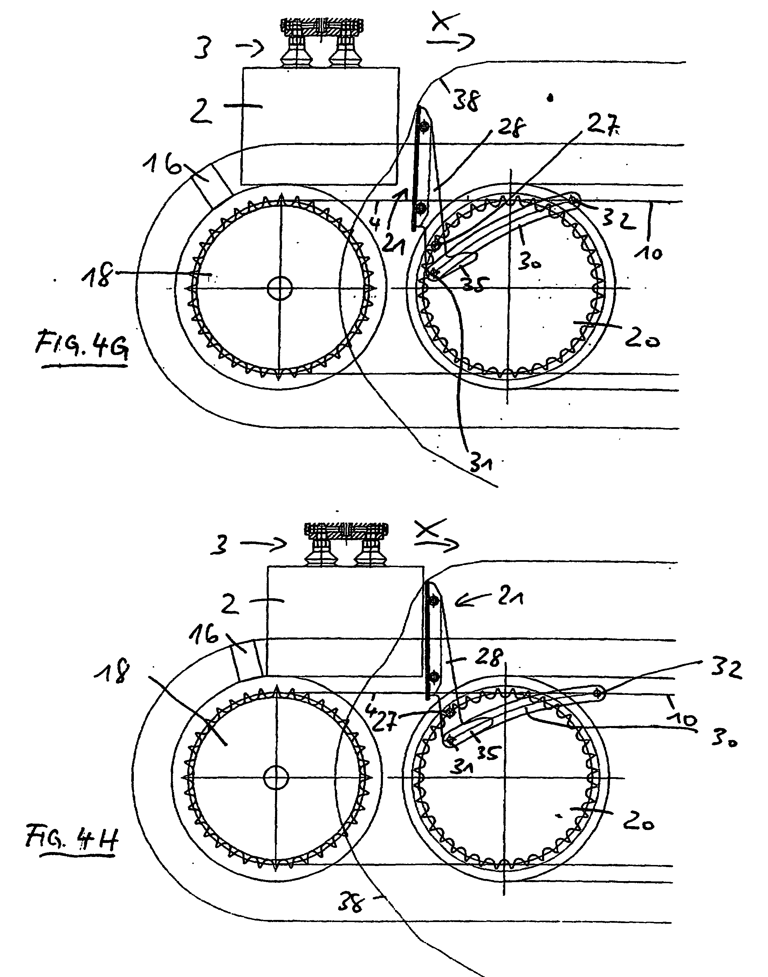

Die Vorrichtung zum kontrollierten Übernehmen der Faltschachtel 2 weist, wie insbesondere der Darstellung der Figur 1 zu entnehmen ist, zwei in relativ großem Abstand zueinander angeordnete, vertikal orientierte Förderketten 4 auf, deren Kettenglieder gleichfalls mit Auflagestücken 5 versehen sind und auf denen die jeweilige Faltschachtel 2 ruht. Der Abstand der beiden Förderketten 4 ist so bemessen, daß die Faltschachtel relativ weit außen auf diesem aufliegt. Zwischen den beiden Förderketten 4 dieses ersten umlaufenden Fördermittels 6 ist, bezogen auf den hinteren Umlenkbereich 7 dieses Fördermittels 6, der hintere Umlenkbereich 8 des zweiten umlaufenden Fördermittels 9 angeordnet. Auch dieses zweite umlaufende Fördermittel 9 weist zwei, allerdings in relativ geringem Abstand zueinander angeordnete Förderketten 10 auf, die gleichfalls senkrecht orientiert sind. Der jeweils obere, horizontal verlaufende Abschnitt der Förderketten 10 ist mittels einer Platte 11 abgedeckt. Zwischen den beiden Förderketten 10 ist eine synchron mit diesen umlaufende Förderkette 12 angeordnet, deren Kettenglieder Auflagestücke 13 aufnehmen, die entsprechend den Auflagestücken 5 gestaltet sind. Das erste und zweite Fördermittel 6 und 9 sind so angeordnet, daß die Oberflächen der Auflagestücke 5 und 13 im oberen horizontalen Bereich des Fördermittels eine Ebene bildet. Die Oberfläche der beiden Abdeckungen 11 befindet sich auf einem geringfügig niedrigeren Niveau, so daß die Faltschachtel 2 nicht auf den Abdeckungen 10 aufliegt. Im übrigen stimmt das Förderniveau der Förderdoppelkette 1, somit das Oberflächenniveau der Auflagestücke dieser Doppelkette 1 mit dem Förderniveau des ersten und zweiten Fördermittels 6, 9 überein. Bei den Ausführungsformen gemäß der Figuren 2 und 4 ist das Förderniveau der Sauganordnung 3 so gewählt, daß die Bodenunterfläche 14 der Faltschachtel 2 eine Ebene mit der horizontalen Förderebene 15 der Fördermittel 6 und 9 bildet. Diese Förderebene ist für das erste Fördermittel 6 aus Gründen der besseren Übersicht in der Figur 4 nicht eingezeichnet.

Jede Förderkette 4 des ersten Fördermittels 6 ist mit mehreren Mitnehmern 16 versehen, die in einem Abstand zueinander angeordnet sind, der größer gewählt ist als die Abmessung der Faltschachtel 2 in Förderrichtung X der Verpackungsmaschine. In den Figuren ist, da dies für das Verständnis der Erfindung ausreicht, nur ein Mitnehmer pro Förderkette 4 gezeigt. Die beiden Mitnehmer des ersten Fördermittels 6 sind aufgrund Ihrer Funktion als hintere Mitnehmer 16 bezeichnet und befinden sich jeweils in derselben Förderposition. Der jeweilige Mitnehmer 16 ist mit der Förderkette 4 verbunden, wobei an dieser Stelle demzufolge kein Auflagestück 5 vorgesehen ist. Die vorlaufende Fläche 17 des hinteren Mitnehmers 16 ist senkrecht zur Förderkette 4 orientiert.

Die Förderkette 4 umschlingt ein Zahnrad 18, das um eine Achse 19 drehbar ist. Der Antrieb für dieses Zahnrad bzw. ein anderes mit der Förderkette 4 kämmendes Zahnrad ist nicht veranschaulicht. Die Zahnräder 20 des Fördermittels 9, von denen nur die im vorderen Umlenkbereich angeordneten Zahnräder gezeigt sind, sind um eine auf gleichem Niveau wie die Achse 19 befindliche Achse 21 drehbar und nehmen die Förderketten 12 auf. Diese Achse 19 nimmt auch das mittlere Zahnrad auf, das die Förderkette 12 umschlingt. Das Antriebsmittel für diese drei Zahnräder ist gleichfalls nicht veranschaulicht. Die Förderketten 4 des ersten Fördermittels, die Förderketten 10 des zweiten Fördermittels sowie die zwischen den Ketten befindliche Förderkette 12 werden mit derselben Geschwindigkeit angetrieben. Mit dieser Geschwindigkeit werden auch im oberen, horizontalen Abschnitt des zweiten Fördermittels 9 Mitnehmer bewegt, die mit diesem Fördermittel verbunden sind. Das Fördermittel weist entsprechend der Anzahl der Mitnehmerpaare des ersten Fördermittels 6 und in entsprechendem Abstand wie diese Mitnehmerpaare die Mitnehmer auf, die aufgrund ihrer Funktion als vordere Mitnehmer 21 bezeichnet werden. Veranschaulicht ist in den Figuren wiederum nur ein vorderer Mitnehmer 21, nämlich derjenige, der mit dem gezeigten hinteren Mitnehmerpaar zusammenwirkt. Der vordere Mitnehmer 21 ist in nachfolgend näher beschriebener Art und Weise beweglich in den beiden Förderketten 10 gelagert und in seiner ausgefahrenen Position gleichfalls senkrecht zu den Förderketten 10 positioniert, so daß dessen nachlaufende Fläche 22 mit der nachlaufenden Fläche 23 der Faltschachtel 2 in Anlage gelangt. Die Höhe des vorderen Mitnehmers 21 ist dabei so groß wie die Höhe der höchsten zu fördernden Faltschachtel 2, wie sie in den Figuren 2 und 4A-4J verdeutlicht ist. Die Höhe des hinteren Mitnehmers 16 ist demgegenüber geringer, konkret geringfügig geringer als die Höhe der niedrigsten zu fördernden Faltschachtel, so daß, unabhängig von der Höhe der Faltschachtel 2 diese im Bereich ihrer oberen hinteren Kante immer für den Verpackungsvorgang zugänglich ist. Der hintere Mitnehmer 16 legt sich somit immer nur im unteren Bereich der Faltschachtel 2 gegen deren nachlaufende Fläche 24 an.

Insbesondere der Darstellung der Figuren 3A bis 3G ist die besondere Lagerung des vorderen Mitnehmers 21 in beiden Förderketten 10 zu entnehmen, wie es für den horizontalen Förderabschnitt des Mitnehmers 21 in dessen senkrecht stehender Position veranschaulicht ist. Die Ketten 10 sind in einer mit einem Gestell 25 verschraubten Gleitschienenführung 26 in seitlichen Führungsausnehmungen gehalten. Eine mittlere Ausnehmung nimmt die mittlere Förderkette 12 auf, deren Kettenglieder mit den Abdeckungen 11 versehen sind. Die der Aufnahme des Mitnehmers 21 dienenden Kettenglieder weisen einen nach außen verlängerten Kettenbolzen 27 auf, auf dem axial gesichert und schwenkbar jeweils ein Lagerhebel 28 gelagert ist. Die beiden in Abstand angeordneten Lagerhebel 28 nehmen die Anschlagplatte 29 des Mitnehmers 21 auf, die mit den Lagerhebeln 28 verschraubt ist. Das unter die jeweilige Förderkette 10 ragende Ende des Lagerhebels 28 ist mit einem stabförmigen Stellelement 30 schwenkbar verbunden, wobei die Schwenkachse mit der Bezugsziffer 31 bezeichnet ist. Einige Kettenglieder in Abstand zur Lagerachse des jeweiligen Lagerhebels 28 ist vor dem Mitnehmer 21 das Stellelement 30 mit einem verlängerten Kettenbolzen 32 schwenkbar und axial festgelegt verbunden. Das Stellelement 30 ist zwischen den beiden Lagerstellen geringfügig in Richtung der Kette gekrümmt ausgebildet. Zwischen den Kettenbolzen 27 und 32 ist, näher zum Kettenbolzen 27 hin, die jeweilige Kette 10 außen mit einer Anlageplatte 33 versehen, die in zwei verlängerten Kettenbolzen 34 gelagert ist. Mit dem Lagerhebel 28 ist im Bereich der Schwenkachse 31 drehfest ein Anschlag 35 verbunden, der in der in Figur 3G gezeigten Endstellung an der Platte 33 anliegt. In dieser Position ist die Anschlagplatte 29 des Mitnehmers 21 vertikal orientiert. Die Anschlagplatte 29 ist oben mit einer zentralen, rechteckigen Ausnehmung 36 versehen. Figur 3C zeigt einen Ausschnitt der Gleitschienenführung 26 mit der in diese eingesetzten Förderkette 10.

Die Figuren 4A bis 4J veranschaulichen diverse Zustände beim Übernehmen der Faltschachtel 2 von der auf Förderhöhe angeordneten Sauganordnung 3 in die erfindungsgemäße zweite Fördervorrichtung. Die Figuren zeigen, daß aufgrund der starren Verbindung des hinteren Mitnehmers 16 dieser wegen der gleichförmigen Bewegung der Förderkette 4 entsprechend gleichförmig hinter die Faltschachtel 2 bewegt wird und mit seiner vorlaufenden Fläche 17 zur Anlage an die nachlaufende Fläche 24 der Faltschachtel gelangt. Dies gilt entsprechend für den anderen Mitnehmer 16 dieses Mitnehmerpaares. Demgegenüber verläuft die Bewegung des vorderen Mitnehmers 21 asynchron, nämlich, bezogen auf die Spitze 37 des Mitnehmers 21 entsprechend der Kurve 38. Beim Umlenken des Mitnehmers im Bereich der Zahnräder 20 wird der Mitnehmer 21 aufgrund des mit dem Umlenken der Kette einhergehenden veränderlichen wirksamen Schwenkabstandes zwischen den Lagerpunkten 27, 31 und 32 asynchron verschwenkt. Das Auftauchen des Mitnehmers 21 in den Bereich vor der Faltschachtel 21 erfolgt relativ schnell, während das Annähern des weitgehend aufgetauchten Mitnehmers 21 an die vorlaufende Fläche 23 der Faltschachtel 2 bei gleichzeitigem Überwinden der geringen Differenzhöhe zum vollständigen Anheben des Mitnehmers 21 sehr langsam geschieht. Diese Verfahrensschritte sind insbesondere in den Figuren 4G bis 4J veranschaulicht. Die Figuren zeigen, daß die Faltschachtel 2 letztendlich vorne und hinten zwischen den Mitnehmern gehalten ist. Nach Beendigung dieser kontrollierten Übergabe werden die Saugkräfte der Sauganordnung 3 deaktiviert und die Sauganordnung angehoben. Auch die Sauganordnung ist zweckmäßig umlaufend, so daß die nachfolgende Sauganordnung die nachfolgende Faltschachtel den nachfolgenden vorderen und hinteren Mitnehmern kontrolliert übergibt, usw. Im vorderen Bereich des die vorderen Mitnehmer 21 aufweisenden umlaufenden Fördermittels 9 wird der jeweilige Mitnehmer aufgrund der kinematischen Anlenkung wieder von der vorlaufenden Fläche 23 der Faltschachtel 2 weg bewegt.

Die in den Figuren 4A bis 4J gezeigte Bewegungsfolge ist in der Figur 2 in einem Bild veranschaulicht.

Die Figuren 3A und 3G verdeutlichen einen Versatz der Anschlagplatte 29 bezüglich der durch den Bolzen 27 gehenden Vertikalen. Dieser Versatz stellt sicher, daß bei der Umlenkung des Mitnehmers 21 dieser nicht an die Kette 10 gelangt. Die Ausnehmung 36 im Mitnehmer 21 ist vorgesehen, um eine Überlappung mit einer eventuell vorhandenen Fördereinheit 1 zu gewährleisten, wie sie zur Figur 1 gezeigt ist.

## Patentansprüche

1. Verfahren zum kontrollierten Übergeben eines Gegenstandes, insbesondere einer teilweise oder vollständig gebildeten Faltschachtel, von einer ersten Fördervorrichtung in eine zweite Fördervorrichtung, wobei die zweite Fördervorrichtung mindestens ein erstes und mindestens ein zweites Fördermittel mit zugehörigen Mitnehmern beinhaltet, mit folgenden Merkmalen:
- die erste Fördervorrichtung bewegt den Gegenstand in Förderrichtung der zweiten Fördervorrichtung in deren Förderbereich,
- mindestens ein hinterer Mitnehmer der zweiten Fördervorrichtung wird hinter den Gegenstand bewegt,
- mindestens ein vorderer Mitnehmer der zweiten Fördervorrichtung wird vor den Gegenstand bewegt,
- die Geschwindigkeit des hinteren Mitnehmers in Förderrichtung des Gegenstandes ist beim Bewegen hinter den Gegenstand größer als die Geschwindigkeit des vorderen Mitnehmers in Förderrichtung des Gegenstandes beim Bewegen vor den Gegenstand, wobei der hintere Mitnehmer beim Bewegen hinter den Gegenstand eine synchrone Bewegung und der vordere Mitnehmer beim Bewegen vor den Gegenstand eine asynchrone Bewegung ausführt,
- bei Beendigung der Bewegungen von hinterem und vorderem Mitnehmer sind die Geschwindigkeiten der Mitnehmer in Förderrichtung gleich.

2. Verfahren nach Anspruch 1, wobei die erste Fördervorrichtung in eine Außerwirkstellung mit dem Gegenstand gebracht wird, sobald sich der hintere und der vordere Mitnehmer in deren hinter bzw. vor den Gegenstand bewegten Endstellungen befinden.

3. Verfahren nach Anspruch 1 oder 2, wobei die erste Fördervorrichtung den Gegenstand im Bereich seiner Oberseite ergreift oder saugend erfaßt.

4. Verfahren nach einem der Ansprüche 1 bis 3, wobei der hintere Mitnehmer und/oder der vordere Mitnehmer eingeschwenkt wird, insbesondere zur Anlage am Gegenstand eingeschwenkt wird.

5. Verfahren nach einem der Ansprüche 1 bis 4, wobei der hintere Mitnehmer synchron zur Bewegung des Gegenstandes mittels der zweiten Fördervorrichtung und/oder der vordere Mitnehmer asynchron zur Bewegung des Gegenstandes mittels der zweiten Fördervorrichtung eingeschwenkt wird.

6. Verfahren nach einem der Ansprüche 1 bis 5, wobei der Gegenstand, insbesondere die Faltschachtel, parallele Flächen aufweist, und der hintere Mitnehmer gegen die in Förderrichtung hintere parallele Fläche und der vordere Mitnehmer gegen die in Förderrichtung vordere parallele Fläche bewegt wird.

7. Verfahren nach einem der Ansprüche 1 bis 6, wobei zwei in Abstand zueinander angeordnete hintere Mitnehmer hinter den Gegenstand und ein, bezogen auf die Förderrichtung zwischen den beiden hinteren Mitnehmern angeordneter vorderer Mitnehmer vor den Gegenstand bewegt wird.

8. Verfahren nach einem der Ansprüche 1 bis 7, wobei der jeweilige hintere Mitnehmer eine Höhe aufweist, die maximal der Höhe des niedrigsten zu transportierenden Gegenstandes und der vordere Mitnehmer eine Höhe aufweist, die etwa der Höhe des höchsten zu transportierenden Gegenstandes entspricht.

9. Vorrichtung zum kontrollierten Übernehmen eines Gegenstandes, insbesondere einer teilweise oder vollständig gebildeten Faltschachtel (2), von einer ersten Fördervorrichtung (1, 3) in eine zweite Fördervorrichtung (6, 9), wobei die zweite Fördervorrichtung (6, 9) mindestens ein erstes umlaufendes Fördermittel (6) aufweist, das mit hinteren Mitnehmern (16) versehen ist, die jeweils starr mit dem ersten Fördermittel (6) verbunden sind, **gekennzeichnet durch** folgende weitere Merkmale:
- mindestens ein zweites umlaufendes Fördermittel (9), das mit vorderen Mitnehmern (21) versehen ist, die jeweils beweglich mit dem zweiten Fördermittel (9) verbunden sind,
- der jeweils vordere Mitnehmer (21) ist mit mindestens einem Lagerhebel (28) verbunden, der schwenkbar im zweiten Fördermittel (9) gelagert ist, und es ist mindestens ein Stellelement (30) zum Schwenken des Lagerhebels (28) vorgesehen, das schwenkbar im zweiten Fördermittel (9) und schwenkbar im Lagerhebel (28) gelagert ist,
- die beiden Fördermittel (6, 9) werden mit derselben Fördergeschwindigkeit angetrieben.

10. Vorrichtung nach Anspruch 9, wobei zwei parallel zueinander angeordnete erste umlaufende Fördermittel (6) und ein zwischen diesen angeordnetes zweites umlaufendes Fördermittel (9) vorgesehen sind.

11. Vorrichtung nach Anspruch 9 oder 10, wobei das erste (6) und/oder das zweite umlaufende Fördermittel (9) als Förderkette ausgebildet sind.

12. Vorrichtung nach einem der Ansprüche 9 bis 11, wobei der hintere Mitnehmer (16) eine Höhe aufweist, die maximal so groß ist, wie die Höhe des niedrigsten zu fördernden Gegenstandes (2), und der vordere Mitnehmer (21) eine Höhe aufweist, die etwa der Höhe entspricht, die der höchste zu fördernde Gegenstand (2) besitzt.

13. Vorrichtung nach einem der Ansprüche 9 bis 12, wobei das Stellelement (30) in dem dem vorderen Mitnehmer (21) vorlaufenden Bereich im zweiten Fördermittel (9) gelagert ist.

14. Vorrichtung nach einem der Ansprüche 9 bis 13, wobei pro vorderem Mitnehmer (21) zwei Lagerhebel (28) und zwei Stellelemente (30) vorgesehen sind, die zwischen sich das zweite Fördermittel (9) aufnehmen, das insbesondere als Doppelkette ausgebildet ist.

15. Vorrichtung nach einem der Ansprüche 9 bis 14, wobei der vordere Mitnehmer (21) derart schwenkbar angelenkt ist, daß er beim Ausfahren im Umlenkbereich der hinteren Umlenkung des zweiten umlaufenden Fördermittels (9) in Art einer Sinusbewegung in den Förderbereich, insbesondere oberen Förderbereich dieses Fördermittels (9), bis zum Erreichen der vertikalen Endstellung des Mitnehmers (21) verschwenkt wird.

16. Vorrichtung nach einem der Ansprüche 9 bis 15, wobei in das zweite Fördermittel (9) ein Anlageelement (33) integriert ist, gegen das ein mit dem Lagerhebel (28) verbundener Anschlag (35) beim Erreichen der ausgeschwenkten Endstellung des Mitnehmers (21) bewegt wird.

17. Vorrichtung nach einem der Ansprüche 9 bis 16, wobei der vordere Mitnehmer (21) mit einer oberen zentralen Aussparung (36) versehen ist.

## Claims

1. Method for the controlled feeding of an article, more particularly a partly or fully formed carton, from a first transfer device to a second transfer device, the second transfer device comprising at least a first and at least a second transfer means and their associated drivers, said method having the following features:
- the first transfer device moves the article into the feed zone of the second transfer device and in the direction of travel thereof,
- at least one rear driver for the second transfer device is moved to the rear of the article,
- at least one frontal driver for the second transfer device is moved to the front of the article,
- the speed of the rear driver in the article's direction of travel is greater as the latter is being moved to the rear of the article than the speed of the frontal driver in the article's direction of travel as the latter is being moved to the front of the article, the rear driver performing a synchronous movement as it is being moved to the rear of the article and the frontal driver performing an asynchronous movement as it is being moved to the front of the article,
- once the movements of the rear and frontal drivers are completed, the speeds of the drivers are identical in the direction of travel.

2. Method according to claim 1, **characterised in that** the first transfer device is moved into a non-operational position relative to the article once the rear and frontal drivers are in their extreme positions, having been moved respectively to the rear and to the front of the article.

3. Method according to claim 1 or 2, **characterised in that** the first transfer device takes hold of the article, or seizes it in a suction grip, in the region of the upper face thereof.

4. Method according to any of claims 1 to 3, **characterised in that** the rear driver and/or frontal driver are swivelled inwards, in particular swivelled into contact with the article.

5. Method according to any of claims 1 to 4, **characterised in that** the rear driver is swivelled inwards by means of the second transfer device in synchronism with the movement of the article, and/or the frontal driver is swivelled inwards by means of the second transfer device in asynchronism with the movement of the article by means of the second transfer device.

6. Method according to any of claims 1 to 5, **characterised in that** the article, more particularly the carton, has parallel faces, and the rear driver is moved against the parallel face lying to the rear in the direction of travel and the frontal driver is moved against the parallel face lying to the front in the direction of travel.

7. Method according to any of claims 1 to 6, **characterised in that** two rear drivers spaced apart from one another are moved to the rear of the article, and one frontal driver arranged between the two rear drivers, based in the direction of travel, is moved in front of the article.

8. Method according to any of claims 1 to 7, **characterised in that** the height of the respective rear driver is no greater than the height of the lowest article that is to be transferred, and the height of the frontal driver is roughly the same as the height of the highest article that is to be transferred.

9. Apparatus for the controlled feeding of an article, more particularly a partly or fully formed carton (2), from a first transfer device (1, 3) to a second transfer device (6, 9), the second transfer device (6, 9) incorporating at least a first revolving transfer means (6) provided with rear drivers (16) which are in each case rigidly joined to the first transfer means (6), **characterised by** having the following additional features:
- at least a second revolving transfer means (9) provided with frontal drivers (21) which are in each case movably joined to the second transfer means (9),
- the respective frontal driver (21) is joined to at least one bearing lever (28) which is swivel-mounted in the second transfer means (9), and at least one final control element (30) for swivelling the bearing lever (28) is provided which is swivel-mounted in the second transfer means (9) and swivel-mounted in the bearing lever (28),
- the two transfer means (6, 9) are driven at the same transfer speed.

10. Apparatus according to claim 9, **characterised by** the provision of two first revolving transfer means (6) arranged parallel to one another and of a second revolving transfer means (9) arranged therebetween.

11. Apparatus according to claim 9 or 10, **characterised in that** the first (6) and/or second revolving transfer means (9) are configured as a conveyor chain.

12. Apparatus according to any of claims 9 to 11, **characterised in that** the height of the rear driver (16) is no greater than the height of the lowest article (2) that is to be transferred, and the height of the frontal driver (21) is roughly the same as the height of the highest article (2) that is to be transferred.

13. Apparatus according to any of claims 9 to 12, **characterised in that** the final control element (30) is mounted in the second transfer means (9), in the region that moves in advance of the front driver (21).

14. Apparatus according to any of claims 9 to 13, **characterised by** the fact that for each frontal driver (21) two bearing levers (28) and two final control elements (30) are provided which between them accommodate the second transfer means (9), which in particular is configured as a double chain.

15. Apparatus according to any of claims 9 to 14, **characterised in that** the frontal driver (21) is articulated so as to swivel in such a way that during in excursion in the rear reversing zone of the second revolving transfer means (9) it is swivelled sinusoidally into the transfer zone, more particularly the upper transfer zone of said transfer means (9), until the vertical extreme position of the driver (21) is reached.

16. Apparatus according to any of claims 9 to 15, **characterised in that** integrated into the second transfer means (9) is a contact member (33) against which a stop (35) connected to the bearing lever (28) is moved as the outward-swivelled extreme position of the driver (21) is reached.

17. Apparatus according to any of claims 9 to 16, **characterised in that** the frontal driver (21) is provided with an upper central recess (36).

## Revendications

1. Procédé pour le passage contrôlé d'un objet, en particulier d'une boîte pliante formée en partie ou complètement, d'un premier dispositif de transport à un deuxième dispositif de transport, dans lequel le deuxième dispositif de transport contient au moins un premier et au moins un deuxième moyen de transport comprenant des mécanismes d'entraînement correspondants, comprenant les caractéristiques indiquées ci-après :
- le premier dispositif de transport déplace l'objet dans la direction de transport du deuxième dispositif de transport dans la zone de transport de ce dernier,
- au moins un mécanisme d'entraînement arrière du deuxième dispositif de transport se déplace pour venir se disposer derrière l'objet,
- au moins un mécanisme d'entraînement avant du deuxième dispositif de transport se déplace pour venir se disposer devant l'objet,
- la vitesse du mécanisme d'entraînement arrière dans la direction de transport de l'objet, lors du déplacement dudit mécanisme pour venir se disposer derrière l'objet est supérieure à la vitesse du mécanisme d'entraînement avant dans la direction de transport de l'objet, lors du déplacement dudit mécanisme pour venir se disposer devant l'objet, dans lequel le mécanisme d'entraînement arrière, lors de son déplacement pour venir se disposer derrière l'objet, met en oeuvre un mouvement synchrone, et le mécanisme d'entraînement avant lors de son déplacement pour venir se disposer devant l'objet, met en oeuvre un mouvement asynchrone,
- lorsque les mouvements des mécanismes d'entraînement arrière et avant s'achèvent, les vitesses des mécanismes d'entraînement sont égales dans la direction de transport.

2. Procédé selon la revendication 1, dans lequel le premier dispositif de transport est amené dans une position de repos par rapport à l'objet dès que le mécanisme d'entraînement arrière et le mécanisme d'entraînement avant se trouve dans leurs positions finales dans lesquelles ils se sont déplacés pour venir se disposer derrière, respectivement devant l'objet.

3. Procédé selon la revendication 1 ou 2, dans lequel le premier dispositif de transport saisit l'objet ou l'attire par aspiration, dans la zone de son côté supérieur.

4. Procédé selon l'une quelconque des revendications 1 à 3, dans lequel le mécanisme d'entraînement arrière et/ou le mécanisme d'entraînement avant sont soumis à un pivotement vers l'intérieur, en particulier sont soumis à un pivotement vers l'intérieur pour venir s'appliquer contre l'objet.

5. Procédé selon l'une quelconque des revendications 1 à 4, dans lequel le mécanisme d'entraînement arrière est soumis à un pivotement vers l'intérieur de manière synchrone par rapport au mouvement de l'objet à l'aide du deuxième dispositif de transport et/ou le mécanisme d'entraînement avant est soumis à un pivotement vers l'intérieur de manière asynchrone par rapport au mouvement de l'objet à l'aide du deuxième dispositif de transport.

6. Procédé selon l'une quelconque des revendications 1 à 5, dans lequel l'objet, en particulier la boîte pliante, présente des surfaces parallèles, le mécanisme d'entraînement arrière venant se placer contre la surface parallèle arrière dans la direction de transport et le mécanisme d'entraînement avant venant se placer contre la surface parallèle avant dans la direction de transport.

7. Procédé selon l'une quelconque des revendications 1 à 6, dans lequel deux mécanismes d'entraînement arrière, qui sont disposés à l'écart l'un de l'autre, viennent se placer derrière l'objet et un mécanisme d'entraînement, disposé entre les deux mécanismes d'entraînement arrière dans la direction de transport, vient se placer devant l'objet.

8. Procédé selon une quelconque des revendications 1 à 7, dans lequel le mécanisme d'entraînement arrière respectif présente une hauteur qui correspond au maximum à la hauteur de l'objet à transporter qui est situé le plus bas et le mécanisme d'entraînement avant présente une hauteur qui correspond approximativement à la hauteur de l'objet à transporter qui est situé le plus haut.

9. Dispositif pour le passage contrôlé d'un objet, en particulier d'une boîte pliante (2) formée en partie ou complètement, d'un premier dispositif de transport (1, 3) à un deuxième dispositif de transport (6, 9), dans lequel le premier dispositif de transport (6, 9) présente au moins un premier moyen de transport périphérique (6) qui est équipé de mécanismes d'entraînement arrière (16) qui sont reliés respectivement de manière rigide au premier moyen de transport (6), **caractérisé par** les particularités supplémentaires indiquées ci-après :
- au moins un deuxième moyen de transport périphérique (9), qui est équipé de mécanismes d'entraînement avant (21), qui sont reliés respectivement en mobilité au deuxième moyen de transport (9),
- le mécanisme d'entraînement avant respectif (21) est relié à au moins un levier de positionnement (28) qui est monté en pivotement dans le deuxième moyen de transport (9), au moins un élément de réglage (30) étant prévu pour le pivotement du levier de positionnement (28), élément qui est monté en pivotement dans le deuxième moyen de transport (9) et qui est monté en pivotement dans le levier de positionnement (28),
- les deux moyens de transport (6, 9) sont entraînés à la même vitesse de transport.

10. Dispositif selon la revendication 9, dans lequel on prévoit deux premiers moyens de transport périphériques (6) réciproquement parallèles et un deuxième moyen de transport périphérique (9) qui est disposé entre les deux premiers cités.

11. Dispositif selon la revendication 9 ou 10, dans lequel le premier moyen de transport (6) et/ou le deuxième moyen de transport périphérique (9) sont réalisés sous la forme d'une chaîne transporteuse.

12. Dispositif selon l'une quelconque des revendications 9 à 11, dans lequel le mécanisme d'entraînement arrière (6) présente une hauteur qui correspond au maximum à la hauteur de l'objet à transporter (2) qui est situé le plus bas et le mécanisme d'entraînement avant (21) présente une hauteur qui correspond approximativement à la hauteur que possède l'objet à transporter (2) qui est situé le plus haut.

13. Dispositif selon l'une quelconque des revendications 9 à 12, dans lequel l'élément de réglage (30) est monté dans la zone du deuxième moyen de transport (9), disposée en amont par rapport au mécanisme d'entraînement avant (21).

14. Dispositif selon l'une quelconque des revendications 9 à 13, dans lequel on prévoit, par mécanisme d'entraînement avant (21), deux leviers de positionnement (28) et deux éléments de réglage (30) entre lesquels vient s'insérer le deuxième moyen de transport (9) qui est réalisé en particulier sous la forme d'une double chaîne.

15. Dispositif selon l'une quelconque des revendications 9 à 14, dans lequel le mécanisme d'entraînement avant (21) est articulé en pivotement de telle sorte qu'il pivote, lors de sa sortie dans la zone de changement de direction du renvoi arrière du deuxième moyen de transport périphérique (9), en effectuant un mouvement sinusoïdal dans la zone de transport, en particulier dans la zone de transport supérieure de ce moyen de transport (9), avant d'atteindre la position finale verticale du mécanisme d'entraînement 21.

16. Dispositif selon l'une quelconque des revendications 9 à 15, dans lequel, un élément d'appui (33) est intégré dans le deuxième moyen de transport (9), élément contre lequel vient se disposer une butée (35) reliée au levier de positionnement (28) lorsque le mécanisme d'entraînement (21) atteint sa position terminale dans laquelle il a pivoté vers l'extérieur.

17. Dispositif selon l'une quelconque des revendications 9 à 16, dans lequel le mécanisme d'entraînement avant (21) est muni d'un évidement central supérieur (36).
